(19) Europäisches Patentamt
European Patent Office
Office européen des brevets

(11) Numéro de publication : **0 289 373 B1**

(12) **FASCICULE DE BREVET EUROPEEN**

(45) Date de publication du fascicule du brevet :
**01.07.92 Bulletin 92/27**

(51) Int. Cl.[5] : **H02M 7/5387, H02P 7/628**

(21) Numéro de dépôt : **88400734.5**

(22) Date de dépôt : **25.03.88**

(54) **Convertisseur à modulation de largeur d'impulsions.**

(30) Priorité : **30.03.87 FR 8704371**

(43) Date de publication de la demande :
**02.11.88 Bulletin 88/44**

(45) Mention de la délivrance du brevet :
**01.07.92 Bulletin 92/27**

(84) Etats contractants désignés :
**AT BE CH DE ES GB GR IT LI NL SE**

(56) Documents cités :
**WO-A-81/03722**
**US-A- 3 379 955**

(56) Documents cités :
**CONFERENCE RECORD OF THE 1986 IEEE INDUSTRY APPLICATIONS SOCIETY ANNUAL MEETING, Denver Colorado, 28 septembre - 3 octobre1986, partie I, pages 630-639, IEEE; S. MANIAS et al.: "An SMR topology with suppressed DC link components and predictive linecurrent wave shaping"**
**PATENT ABSTRACTS OF JAPAN, vol. 9, no. 61 (E-303)[1784], 19 mars 1985; & JP-A-59 198 897 (MITSUBISHI DENKI K.K.)10-11-1984**

(73) Titulaire : **TELEMECANIQUE**
**43-45 Boulevard Franklin Roosevelt**
**F-92500 Rueil-Malmaison (FR)**

(72) Inventeur : **Cornilleau, Hubert**
**12 ter, rue Danes de Montardat**
**F-78100 Saint Germain en Laye (FR)**

(74) Mandataire : **Marquer, Francis et al**
**Cabinet Moutard 35, Avenue Victor Hugo**
**F-78960 Voisins le Bretonneux (FR)**

EP 0 289 373 B1

Jouve, 18, rue Saint-Denis, 75001 PARIS

**Description**

La présente invention concerne un convertisseur d'énergie électrique, notamment un convertisseur de fréquence, fonctionnant par modulation de largeur d'impulsions -en abrégé MLI, ou PWM- et susceptible d'être raccordé à une charge en vue de faire varier l'énergie fournie à celle-ci.

Les convertisseurs de fréquence connus pour moteurs synchrones ou asynchrones comprennent généralement un pont redresseur relié à un onduleur par un circuit intermédiaire muni d'une capacité de lissage. L'onduleur doit être raccordé aux enroulements de phase du moteur et il fonctionne par modulation de largeur d'impulsions. L'onduleur présente plusieurs bras dont chacun est équipé de deux interrupteurs statiques munis de diodes respectives de récupération. Le point milieu de chaque couple d'interrupteurs d'un même bras est relié à un enroulement respectif de phase du moteur. Un circuit de commande permet de rendre passants et bloquants les interrupteurs aux instants choisis (WO-A-81/03722).

Par interrupteurs statiques, on entend présentement des transistors bipolaires ou MOS, des composants MOS-bipolaires tels que ceux connus sous la désignation IGT, des thyristors blocables du genre GTO ou d'autres composants blocables analogues.

Si l'on suppose que le premier interrupteur d'un bras est bloqué et que le deuxième interrupteur du même bras n'est pas encore mis en conduction, le courant qui transite par l'enroulement de phase du moteur relié au point milieu du bras passe par la diode de récupération associée au premier interrupteur. Lorsque le deuxième interrupteur entre en conduction et pendant le temps de recouvrement de la première diode, cet interrupteur subit le passage du courant inverse de la première diode en même temps que le passage du courant d'un enroulement du moteur et, tant que la tension aux bornes de l'interrupteur n'est pas descendue à une valeur de conduction $V_{CESAT}$, on constate des pertes de commutation élevées.

Bien entendu, les pertes de commutation augmentent avec la fréquence opératoire du convertisseur. Or, cette fréquence est liée à la valeur des inductances du moteur et elle doit être d'autant plus grande que les inductances sont faibles. Dans le cas d'un moteur synchrone, ceci est précisément le cas et il est donc nécessaire d'utiliser une fréquence de commutation importante avec corollairement des pertes de commutation non négligeables. D'autre part, dans le cas d'un moteur asynchrone et bien que les inductances de ce dernier soient relativement élevées, on observe une tendance à augmenter la fréquence du convertisseur, en vue de diminuer le couple pulsatoire et le bruit, ce qui se traduit là encore par un accroissement des pertes de commutation.

Dans un agencement connu permettant de réduire les pertes de commutation, le convertisseur comporte en série avec chaque interrupteur une inductance et en parallèle à chaque interrupteur un réseau résistance-capacité-diode RCD. Chaque inductance contribue à limiter le passage transitoire de courant précédemment décrit à la mise en conduction de l'interrupteur, tandis qu'au blocage de celui-ci l'énergie emmagasinée dans l'inductance charge la capacité à travers la diode, la capacité se déchargeant ensuite via la résistance. Cet agencement présente l'inconvénient de nécessiter pour chaque interrupteur une inductance et un réseau auxiliaire RCD. De plus, il ne permet pas d'utiliser des ponts intégrés comprenant les interrupteurs interconnectés avec leurs diodes de récupération.

La présente invention vise à pallier ces inconvénients en réduisant efficacement les pertes de commutation d'un convertisseur -notamment d'un convertisseur de fréquence- à modulation de largeur d'impulsions au moyen d'un dispositif simple, à faible nombre de constituants et de coût réduit.

L'expression convertisseur MLI désigne tout générateur de tension variable à largeur d'impulsions modulée tel que convertisseur de fréquence pour moteur synchrone ou asynchrone, convertisseur pour moteur à courant continu, onduleur fournissant une tension alternative, etc...

L'invention vise de plus à permettre dans certains cas la récupération des pertes résiduelles de commutation survenant dans le pont modulateur du convertisseur.

Selon l'invention, le convertisseur comprend dans l'un des conducteurs reliant le circuit intermédiaire au pont modulateur une inductance d'aide à la mise en conduction des interrupteurs statiques du pont et en parallèle aux bras du pont un condensateur de transfert en série avec une diode pour permettre d'absorber l'énergie fournie par l'inductance quand se produit le blocage des interrupteurs statiques, tandis qu'une résistance est prévue pour permettre de décharger le condensateur de transfert.

Cette résistance peut être disposée en parallèle à la diode de transfert ; elle est de préférence disposée en parallèle au circuit série composé de l'inductance d'aide à la mise en conduction et de la diode de transfert, ce qui permet de décharger le condensateur de transfert dans la capacité de lissage propre au circuit de tension continue situé en amont de l'onduleur.

Dans un mode de réalisation avantageux du convertisseur selon l'invention, un condensateur écrêteur à forte capacité est disposé en parallèle au condensateur de transfert pour stocker le surplus d'énergie en cas de court-circuit, tandis qu'une résistance de décharge est associée à ce condensateur écrêteur. Il en résulte qu'on peut utiliser un condensateur de transfert à capacité réduite et un condensateur écrêteur à faible courant efficace, ce qui diminue le prix de revient du convertisseur.

De plus, une alimentation à découpage peut avantageusement être connectée aux bornes du condensateur de transfert et/ou du condensateur écrêteur de manière à récupérer une partie de l'énergie de commutation des interrupteurs statiques, en vue d'alimenter le circuit de commande des interrupteurs, voire de restituer l'énergie en amont du convertisseur.

Un mode de réalisation sera décrit par la suite, à titre d'exemple non limitatif, en regard des dessins annexés.

La figure 1 représente schématiquement un mode de réalisation du convertisseur selon l'invention ;

La figure 2 montre une forme d'exécution préférée du convertisseur de la figure 1.

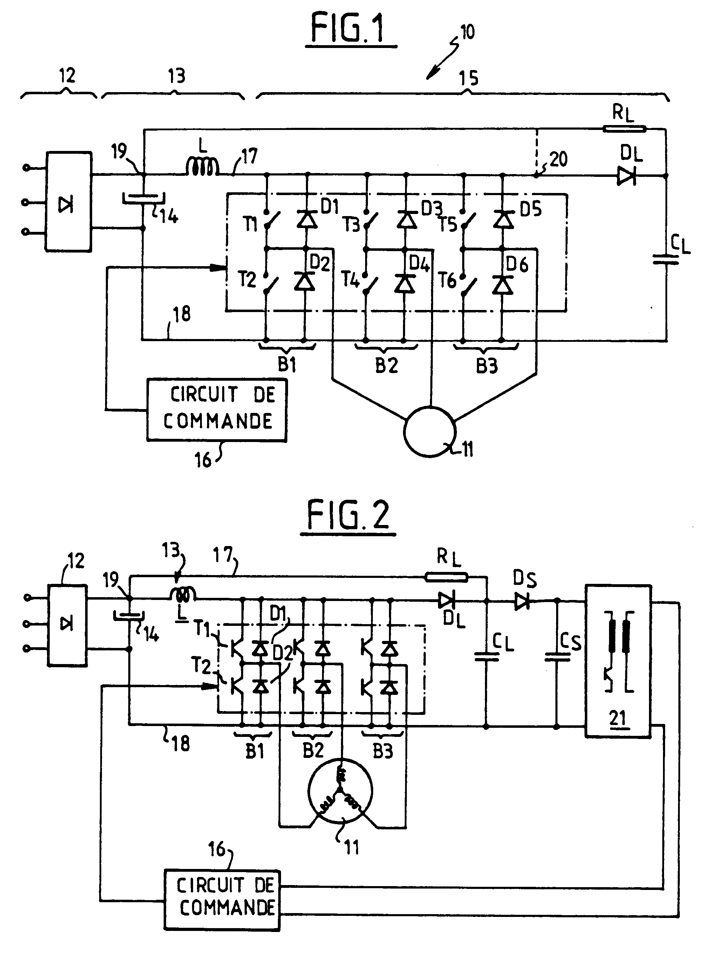

Le convertisseur 10 de la figure 1 est un convertisseur de fréquence à modulation de largeur d'impulsions MLI qui est associé à une charge par exemple constituée par un moteur synchrone 11.

Le convertisseur 10 comprend de façon usuelle un pont redresseur 12 relié aux conducteurs de phase du réseau, un circuit intermédiaire 13 de tension continue muni d'une capacité de lissage 14 et un onduleur 15 relié au pont redresseur via le circuit intermédiaire. L'onduleur présente trois bras B1, B2, B3 reliés chacun à un enroulement de phase du moteur synchrone 11.

Chaque bras B1-B3 de l'onduleur 15 est équipé de deux interrupteurs statiques, T1, T2 pour B1, T3, T4 pour B2, T5, T6 pour B3, munis de diodes respectives de récupération D1-D6.

Le point milieu de chaque couple d'interrupteurs d'un même bras est relié à un enroulement respectif de phase du moteur. Un circuit de commande 16 permet de rendre passants et bloquants les interrupteurs T1-T6 aux instants choisis.

Selon l'invention, une inductance L d'aide à la mise en conduction de l'ensemble des interrupteurs statiques T1-T6 est disposée dans l'un des conducteurs 17, 18 qui relient le pont redresseur 12 -ou le circuit intermédiaire 13- à l'onduleur 14. Un condensateur de transfert $C_L$ est disposé en parallèle aux bras B1-B3 de l'onduleur, ce condensateur étant en série avec une diode de transfert $D_L$ pour recevoir l'énergie de l'inductance L au blocage des divers interrupteurs statiques T1-T6. Une résistance $R_L$ de décharge du condensateur de transfert $C_L$ est disposée entre celui-ci et un point 19 du conducteur 17 en amont de l'inductance L. De manière moins avantageuse, la résistance $R_L$ pourrait être reliée à un point 20 du conducteur 17 en aval de l'inductance comme indiqué en tirets sur la figure 1.

Dans la variante préférée de la figure 2, un condensateur $C_S$ écrêteur -ou limiteur de court-circuit- est disposé en parallèle au condensateur de transfert $C_L$, tandis qu'une diode $D_S$ est associée à ce condensateur pour en permettre la charge en cas de court-circuit accidentel du moteur ou en cas de conduction simultanée de deux interrupteurs d'un même bras.

Dans une variante plus coûteuse, un seul condensateur $C_L$ présentant à la fois une caractéristique de courant élevée et une forte capacité pourrait être substitué au condensateur $C_L$ et $C_S$ décrits précédemment.

Le fonctionnement du dispositif de la figure 2 s'effectue comme suit. La fréquence de commutation étant élevée, le condensateur de transfert $C_L$ exécute des cycles de charge et de décharge à la même fréquence ; on utilise à cet effet un condensateur à fort courant efficace, mais à faible capacité de manière à en limiter le coût et l'encombrement. En cas de court-circuit, le condensateur écrêteur $C_S$ absorbe l'énergie stockée dans l'inductance L ; il présente à cet effet une forte capacité, mais n'a pas besoin de supporter en marche normale un courant efficace élevé. Une partie de l'énergie de commutation emmagasinée par le condensateur de transfert $C_L$ est récupérée par une alimentation à découpage 21 reliée au circuit de commande 16, le condensateur $C_L$ ou $C_S$ constituant ainsi le condensateur d'entrée de cette alimentation.

## Revendications

1. Convertisseur à modulation de largeur d'impulsions pour délivrer une énergie électrique variable à une charge inductive, comprenant un onduleur relié à une source de tension continue et piloté en modulation de largeur d'impulsions par un circuit de commande, l'onduleur présentant plusieurs bras (B1-B3) dont chacun comporte deux interrupteurs statiques (T1, T2 ; T3, T4 ; T5, T6) munis de diodes respectives (D1-D6) de récupération, le point milieu entre deux interrupteurs étant relié à la charge inductive, caractérisé par le fait qu'il comprend :

   – dans l'un des conducteurs (17,18) reliant la source de tension continue (12) à l'onduleur (15), une inductance (L) d'aide à la mise en conduction de l'ensemble des interrupteurs statiques (T1-T6),

   – en parallèle aux bras (B1-B3) de l'onduleur, un condensateur de transfert ($C_L$) en série avec une diode de transfert ($D_L$) pour recevoir l'énergie de l'inductance lors du blocage des interrupteurs statiques,

   – une résistance ($R_L$) de décharge du condensateur de transfert, connectée au conducteur (17,18) reliant la source de tension continue (12) à l'onduleur (15).

2. Convertisseur selon la revendication 1, caractérisé par le fait que la résistance ($R_L$) de décharge du condensateur de transfert ($C_L$) est connectée au conducteur (17,18) en amont de l'inductance (L) d'aide à la mise en conduction.

3. Convertisseur selon la revendication 1 ou 2, caractérisé par le fait que le condensateur de transfert ($C_L$) a une faible capacité et qu'un condensateur écrêteur ($C_S$) de forte capacité est disposé en parallèle au condensateur ($C_L$) pour être chargé via une diode ($D_S$) en cas de court-circuit.

4. Convertisseur selon la revendication 2 ou 3, caractérisé par le fait qu'une alimentation à découpage (21) est connectée aux bornes du condensateur de transfert ($C_L$) ou du condensateur écrêteur ($C_S$)

## Patentansprüche

1. Pulsbreitenmodulationswandler, um einer induktiven Last einen variablen elektrischen Strom zuzuführen, mit einem Wechselrichter, der an eine Gleichspannungsquelle angeschlossen ist und durch eine Steuerschaltung in Pulsbreitenmodulation gesteuert wird, wobei besagter Wechselrichter mehrere Zweige (B1 - B3) aufweist, die jeweils mit zwei statischen Schaltern (T1, T2 ; T3, T4 ; T5, T6) mit entsprechenden Rückgewinnungsdioden (D1 - D6) versehen sind und der Mittelpunkt zwischen zwei Schaltern an die induktive Last angeschlossen ist, dadurch gekennzeichnet, dass er aufweist :

– in einem der Leiter (17, 18), welche die Gleichspannungsquelle (12) mit dem Wechselrichter (15) verbinden, eine Induktanz (L), die mitwirkt, die Gesamtheit der statischen Schalter (T1 - T6) leitfähig zu machen,

– parallel zu den Zweigen (B1 - B3) des Wechselrichters, einen in Reihe mit einer Übertragungsdiode ($D_L$) angeschlossenen Übertragungskondensator ($C_L$), welcher den Induktanzstrom aufnimmt, wenn die statischen Schalter blockiert sind,

– einen Widerstand ($R_L$), der den Übertragungskondensator entladt und an den Leiter (17, 18) angeschlossen ist, welcher die Gleichspannungsquelle (12) mit dem Wechselrichter (15) verbindet.

2. Wandler nach Anspruch 1, dadurch gekennzeichnet, dass der Widerstand ($R_L$) zum Entladen des Übertragungskondensators ($C_L$) oberhalb der Induktanz (L), die bei der Leitfähigmachung mitwirkt, an den Leiter (17, 18) angeschlossen ist.

3. Wandler nach Anspruch 1 oder 2, dadurch gekennzeichnet, dass der Übertragungskondensator ($C_L$) eine geringe Leistungsfähigkeit besitzt und ein Begrenzungskondensator ($C_S$) mit hoher Leistungsfähigkeit parallel zum Kondensator ($C_L$) angeordnet ist, um, im Falle eines Kurzschlusses, mittels einer Diode ($D_S$) aufgeladen zu werden.

4. Wandler nach Anspruch 2 oder 3, dadurch gekennzeichnet, dass eine zerhackte Stromspeisequelle (21) an die Klemmen des Übertragungskondensators ($C_L$) oder des Begrenzungskondensators ($C_S$) angeschlossen ist.

## Claims

1. A pulse width modulation converter for delivering variable electric energy to an inductive load, including an inverter connected to a DC voltage source and driven in pulse width modulation by a control circuit, the inverter having several arms (B1-B3) each of which includes two static switches (T1,T2 ; T3,T4 ; T5,T6) with respective recovery diodes (D1-D6), the middle point between two switches being connected to the inductive load, characterized by the fact that it comprises :

– in one of the conductors (17,18) connecting the DC voltage source (12) to the inverter (15), an inductance (L) assisting the starting of conduction of the static switches (T1-T6),

– in parallel across the arms (B1-B3) of the inverter, a transfer capacitor ($C_L$) in series with a transfer diode ($D_L$) for receiving the energy from the inductance when the static switches are disabled,

– a resistor ($R_L$) for discharging the transfer capacitor, connected to the conductor (17,18) connecting the DC voltage source (12) to the inverter (15).

2. Converter according to claim 1, characterized by the fact that the resistor ($R_L$) for discharging the transfer capacitor ($C_L$) is connected to the conductor (17,18) upstream of the conduction assistance inductance (L).

3. Converter according to claim 1 or 2, characterized by the fact that the transfer capacitor ($C_L$) has a low capacity and a clipping capacitor ($C_S$) of high capacity is disposed in parallel with the capacitor ($C_L$) for being charged via a diode ($D_S$) in the case of a short circuit.

4. Converter according to claim 2 or 3, characterized by the fact that a chopped power supply (21) is connected to the terminals of the transfer capacitor ($C_L$) or of the clipping capacitor ($C_S$).

<u>FIG.1</u>

<u>FIG.2</u>